# FASCICULE DE BREVET EUROPEEN

(11) **EP 0 526 292 B1**
(45) Date de publication et mention de la délivrance du brevet: **19.04.1995**
(21) Numéro de dépôt: 92401989.6
(22) Date de dépôt: 09.07.1992
(51) Int. Cl.: G01B 9/021, G01B 9/025, G03H 1/28

(54) **Système pour l'enregistrement d'une série d'interférogrammes**
System zur Aufzeichnung einer Serie von Hologrammen
System for the recording of a series of holograms

(30) Priorité: 02.08.1991 FR 9109850
(43) Date de publication de la demande: 03.02.1993
(73) Titulaire: AUTOMOBILES PEUGEOT, 75116 Paris (FR); AUTOMOBILES CITROEN, 92200 Neuilly-sur-Seine (FR)
(72) Inventeur: Linet, Virginie, F-75014 Paris (FR); Bohineust, Xavier, F-75015 Paris (FR); Pedrini,Giancarlo, CH-6763 Osco (CH)
(74) Mandataire: Robert, Jean-François

(56) Documents cités:
- GB-A- 1 227 807
- US-A- 4 396 289
- APPLIED OPTICS vol. 27, no. 18, 15 Septembre 1988, NEW YORK, NY, USA pages 3855-3858 ; GUANMING LAI et al. : "Dual-reference holographic interferometry with a double pulsed laser"
- PATENT ABSTRACTS OF JAPAN vol. 10, no. 45 (P-430)(2102) 21 Février 1986 & JP-A-60 190 818
- OPTICS COMMUNICATIONS vol. 41, no. 4, Avril 1982, AMSTERDAM, NL, pages 233-238 ; K.D. MERBOLDT et al.: "High-speed holocinematography with acoustooptic light deflection"

## Description

L'invention se rapporte au domaine de l'holographie et a plus spécialement pour objet un système permettant d'enregistrer une série d'interférogrammes ou hologrammes double exposition lorsque ceux-ci sont obtenus à des intervalles de temps extrêmement courts.

L'étude du comportement vibratoire d'une structure, lorsqu'elle est soumise à une excitation de nature diverse, peut être améliorée si l'on est capable d'enregistrer l'évolution des déplacements en fonction du temps.

L'interférométrie holographique, particulièrement bien adaptée à l'étude des vibrations de par sa résolution spatiale élevée, ne peut mesurer les déformations d'une structure qu'entre deux instants, correspondant aux instants de tir laser.

L'utilisation de lasers pulsés permet de réaliser des hologrammes à des instants très rapprochés, correspondant à deux pulses consécutifs du laser. Par exemple, certains lasers à rubis peuvent fournir des séries de quatre pulses ayant une durée de 20 nanosecondes en un temps inférieur à 800 microsecondes.

On rappelle que l'interférométrie holographique consiste à enregistrer, sur une même plaque photosensible, deux hologrammes superposés correspondant à deux états différents de la pièce à étudier. A la restitution, les deux hologrammes sont reconstruits par la même source laser et donnent des franges d'interférences caractéristiques des déformations de la pièce entre les deux instants considérés.

Le document GB-A-2118736 décrit un procédé de ce type dans lequel on utilise au moins quatre faisceaux de référence et un seul faisceau objet, l'observation étant faite à l'aide d'au moins quatre caméras ou quatre plaques holographiques séparées.

Le document J. PHYSICS D: APPL. PHYS. vol.11,N°2, Février 1978, pages 177-180. T. TSCHUDI ET AL "A study of high-power laser effects in dielectrics using multiframe picosecond holography" décrit un procédé dans lequel on utilise plusieurs faisceaux objets traversant la cible sous des angles différents en introduisant des retards entre les différents couples faisceau de référence-faisceau objet pour obtenir des hologrammes ou interférogrammes décalés dans le temps.

Pour étudier le comportement d'une structure soumise à des vibrations, il est nécessaire d'enregistrer des séries d'interférogrammes à des instants très rapprochés, l'intervalle étant inférieur à la période des vibrations. Avec un laser à rubis, l'intervalle entre les pulses peut varier de 2 à 250 microsecondes. La difficulté est de combiner les pulses deux à deux afin d'obtenir des interférogrammes bien séparés sur la plaque holographique.

Il existe des méthodes d'enregistrement ultra-rapide d'une série d'hologrammes utilisant un miroir tournant pour dévier les faisceaux de référence. De telles méthodes sont utilisées pour la mesure de vitesse de particules. Cependant, ces procédés s'appliquent surtout à des hologrammes simple exposition alors que les interférogrammes sont constitués d'hologrammes double exposition. De plus, les miroirs présentent toujours une certaine inertie et il est difficile de les synchroniser avec les tirs laser.

L'invention a pour but d'éliminer ces inconvénients en proposant un système qui permet d'enregistrer facilement et très rapidement une série d'hologrammes double exposition lorsque l'intervalle entre deux hologrammes consécutifs est très court.

Plus précisément, le système objet de l'invention est un système pour l'enregistrement, sur une plaque holographique, d'une série d'interférogrammes obtenus en illuminant la plaque, pour deux états différents d'une pièce à observer, avec un faisceau de référence et un faisceau objet renvoyé par la pièce, ces deux faisceaux étant issus d'une source laser pulsée, comprenant, interposés sur le trajet du faisceau de référence, un dispositif de déviation de ce faisceau et un dispositif de dédoublement de celui-ci agencés de sorte que les interférogrammes soient séparés les uns des autres sur la plaque holographique.

Selon la principale caractéristique de ce système, il comprend en outre un dispositif de synchronisation du dispositif de déviation avec les pulses du laser et le dispositif de dédoublement du faisceau de référence comprend un interféromètre.

Selon un premier mode de réalisation, le dispositif de déviation comprend un déviateur acousto-optique qui peut, par exemple, comporter deux déflecteurs acousto-optiques travaillant à la même fréquence.

Selon un autre mode de réalisation, le dispositif de déviation comporte un miroir tournant.

Si l'on utilise un déviateur acousto-optique, le dispositif de synchronisation est un générateur à retard synchronisant les changements de fréquence du déviateur acousto-optique avec les pulses du laser.

Dans un mode de réalisation préféré, l'interféromètre comprend:
- une première lame semi-réfléchissante séparant un faisceau incident en deux faisceaux transmis; et
- deux miroirs renvoyant les faisceaux transmis sur une deuxième lame semi-réfléchissante qui les renvoie sur la plaque holographique,

l'orientation des miroirs et des lames semi-réfléchissantes étant telle qu'un au moins des faisceaux transmis par le déviateur lorsque celui-ci est dans un état correspondant à l'enregistrement d'un hologramme frappe la plaque au même endroit que le faisceau transmis par le déviateur lorsque celui-ci est dans un état correspondant à l'enregistrement de l'hologramme immédiatement suivant ou immédiatement précédent.

Dans un autre mode de réalisation, le dispositif de dédoublement du faisceau de référence est un réseau de diffraction à deux ordres.

Enfin, le système objet de l'invention peut encore comporter:
- un diaphragme interposé sur le trajet du faisceau de référence; et
- au moins une lentille ou analogue interposée sur le trajet du faisceau de référence de manière à former l'image du diaphragme sur la plaque.

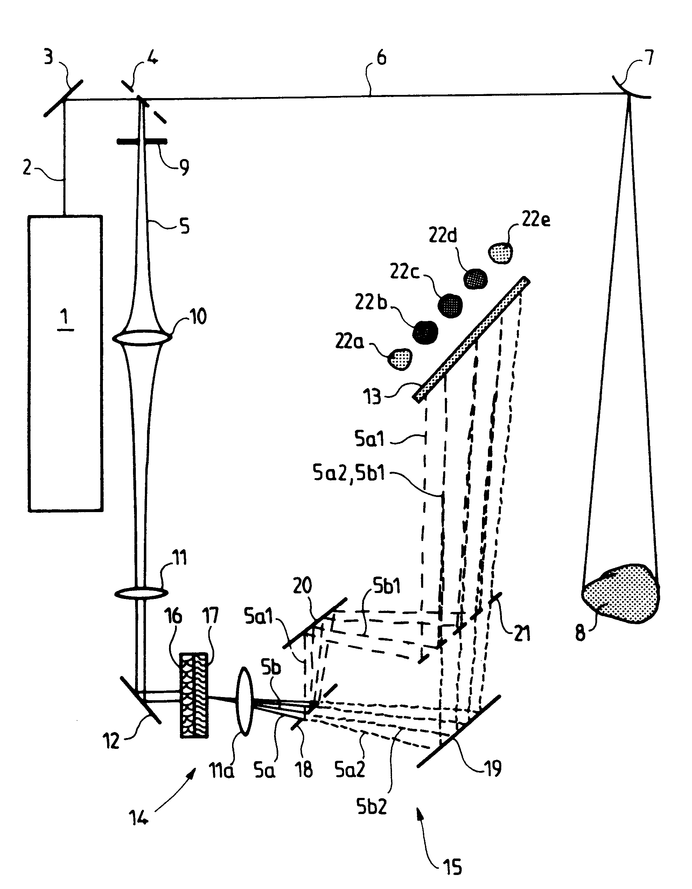

L'invention apparaîtra mieux à la lecture de la description qui va suivre, donnée uniquement à titre d'exemple, en référence au dessin annexé, lequel comporte une figure unique qui est une vue schématique d'une installation holographique comportant un système d'enregistrement d'une série d'interférogrammes conforme à l'invention.

Cette installation se compose essentiellement d'une source laser 1, de préférence un laser pulsé, émettant un faisceau 2. On peut utiliser par exemple un laser à rubis équipé d'un déclencheur 4 pulses. Le faisceau 2 est renvoyé par un miroir 3 sur une lame semi-réfléchissante 4 qui le divise en un faisceau de référence 5 et un faisceau objet 6. Ce dernier est renvoyé par un miroir 7 sur la pièce à étudier 8. Le miroir 7 peut être convexe pour faire diverger le faisceau et illuminer la plus grande surface possible de la pièce 8.

Le faisceau de référence 5 issu de la lame 4 passe d'abord à travers un diaphragme 9, puis à travers un système de deux lentilles 10,11 dont le rôle sera expliqué plus loin. Le faisceau 5 est ensuite renvoyé par un miroir 12 à travers le système objet de l'invention, qui sera décrit plus loin, avant de frapper la plaque holographique 13. Cette dernière est également frappée par le faisceau objet renvoyé par la pièce 8, ce qui permet de réaliser les hologrammes.

Entre le miroir 12 et la plaque 13 est interposé le système objet de l'invention qui se compose essentiellement d'un dispositif de déviation du faisceau, portant la référence générale 14, et d'un dispositif de dédoublement de ce faisceau portant la référence générale 15.

Le dispositif de déviation sert à dévier le faisceau à chaque pulse du laser afin de bien séparer les interférogrammes. Quant au dispositif de dédoublement, son utilité vient de ce que chaque faisceau correspondant à un état de la pièce est utilisé deux fois pour réaliser la série d'interférogrammes. En effet, un interférogramme est constitué par la superposition de deux hologrammes correspondant à deux états consécutifs de la pièce. C'est ainsi que le premier interférogramme correspond à la différence entre l'état 1 et l'état 2, le deuxième à la différence entre l'état 2 et l'état 3, etc...: on voit donc que l'hologramme correspondant à l'état 2 intervient dans le premier et dans le deuxième interférogrammes.

Dans l'exemple illustré au dessin, le dispositif 14 est un déviateur acousto-optique composé de deux déflecteurs acousto-optiques croisés 16 et 17 travaillant à la même fréquence.

On rappelle qu'un déviateur acousto-optique est un dispositif dont l'indice de réfraction (et donc l'angle de déviation du faisceau) change suivant la fréquence des ondes acoustiques qui le traversent. Un dispositif tel qu'un générateur à retard (non représenté) permet de synchroniser les changements de fréquence avec les pulses du laser. Dans l'exemple décrit ici, le dispositif 14 permet de renvoyer le faisceau suivant quatre directions différentes correspondant à quatre pulses consécutifs du laser.

Quant au dispositif de dédoublement 15, ce peut être avantageusement un interféromètre tel qu'un interféromètre de Mach-Zender. Celui-ci se compose d'une première lame semi-réfléchissante 18 qui divise en deux un faisceau incident. Les faisceaux transmis sont renvoyés par deux miroirs 19 et 20 sur une deuxième lame semi-réfléchissante 21 qui les recombine et les renvoie sur la plaque holographique 13 de la manière qui sera décrite ci-après.

Le fonctionnement du système objet de l'invention est le suivant:

Lors du premier pulse du laser, le dispositif 14 dévie le faisceau de référence 5 suivant la direction référencée 5a sur le dessin. La lame semi-réfléchissante 18 divise le faisceau 5a en deux faisceaux 5a1 et 5a2. Le faisceau 5a1 est renvoyé par le miroir 20 sur la lame semi-réfléchissante 21 qui le renvoie sur le premier emplacement 22a de la plaque 13 (les différents emplacements de la plaque sont référencés de 22a à 22e). Le faisceau 5a2 est renvoyé par le miroir 19 sur la lame semi-réfléchissante 21 qui le renvoie sur le deuxième emplacement 22b de la plaque. Les faisceaux 5a1 et 5a2 interfèrent avec le faisceau objet pour former l'hologramme correspondant à l'état 1 sur les deux premiers emplacements 22a et 22b.

Lors du deuxième pulse du laser, le faisceau de référence 5 est dévié suivant la direction 5b. La lame semi-réfléchissante 18 divise le faisceau 5b en un faisceau 5b1 et un faisceau 5b2. Le faisceau 5b1 est renvoyé par le miroir 20 et la lame semi-réfléchissante 21 sur le deuxième emplacement 22b de la plaque 13 où il formera un hologramme qui se combinera avec celui obtenu par le faisceau 5a2 pour former le premier interférogramme.

Quant au faisceau 5b2, il est renvoyé par le miroir 19 sur la lame semi-réfléchissante 21 qui le renvoie sur le troisième emplacement 22c de la plaque 13 où il formera un hologramme qui se combinera. lors du troisième pulse du laser, avec l'hologramme formé par un faisceau issu du dispositif 14 suivant une troisième direction, et ainsi de suite.

Dans l'exemple décrit ici, où l'on travaille sur des séries de quatre pulses du laser, on obtient cinq hologrammes aux emplacements 22a à 22e; ceux situés aux extrémités sont des hologrammes simple exposition (22a et 22e) tandis que les autres sont des interférogrammes.

Le système objet de l'invention présente donc des avantages particulièrement intéressants puisqu'il permet d'obtenir des interférogrammes bien séparés et en un temps très court, c'est-à-dire quel que soit l'intervalle entre les pulses du laser puisque le dispositif 14 est synchronisé avec ce dernier. Les lentilles 10 et 11, situées en amont du dispositif 14 par rapport au sens de marche du faisceau 5,et la lentille 11a située en aval de ce dispositif, servent à former l'image du diaphragme 9 sur la plaque 13, ce qui permet d'ajuster le diamètre des taches pour que celles-ci ne se chevauchent pas. Les lentilles 10 et 11 ont en outre pour fonction de rendre le faisceau parallèle et de diamètre suffisamment faible pour pouvoir pénétrer dans le dispositif 14. On peut donc, grâce à l'invention, facilement étudier le comportement d'une pièce soumise à des vibrations dont la fréquence est de l'ordre de quelques kiloherz.

Enfin, il est bien entendu que l'invention ne se limite pas au seul mode de réalisation décrit et représenté, mais qu'elle en couvre au contraire toutes les variantes. C'est ainsi qu'on pourra, sans sortir du cadre de l'invention, remplacer le dispositif 14 par un miroir tournant ou l'interféromètre 15 par un dispositif tel qu'un réseau de diffraction à deux ordres et utiliser n'importe quel type de laser pulsé.

## Revendications

1. Système pour l'enregistrement, sur une plaque holographique (13), d'une série d'interférogrammes obtenus en illuminant la plaque (13), pour deux états différents d'une pièce (8) à observer, avec un faisceau de référence (5) et un faisceau objet (6) renvoyé par la pièce (8), ces deux faisceaux étant issus d'une source laser pulsée (1), comprenant, interposés sur le trajet du faisceau de référence (5), un dispositif (14) de déviation de ce faisceau (5) et un dispositif (15) de dédoublement de celui-ci agencés de sorte que les interférogrammes soient séparés les uns des autres sur la plaque holographique, caractérisé en ce qu'il comporte en outre un dispositif de synchronisation du dispositif de déviation (14) avec les pulses du laser (1) et en ce que le dispositif (15) de dédoublement du faisceau de référence comprend un interféromètre.

2. Système selon la revendication 1, caractérisé en ce que le dispositif de déviation (14) comprend un déviateur acousto-optique.

3. Système selon la revendication 2, caractérisé en ce que ledit déviateur comprend deux déflecteurs acousto-optiques croisés (16,17) travaillant à la même fréquence.

4. Système selon la revendication 1, caractérisé en ce que le dispositif de déviation comporte un miroir tournant.

5. Système selon l'une quelconque des revendications 2 et 3, caractérisé en ce que le dispositif de synchronisation est un générateur à retard synchronisant les changements de fréquence du déviateur acousto-optique (14) avec les pulses du laser (1).

6. Système selon l'une quelconque des revendications 1 à 5, caractérisé en ce que l'interféromètre (15) comprend:
- une première lame semi-réfléchissantes (18) séparant un faisceau incident (5a) en deux faisceaux transmis (5a1 et 5a2); et
- deux miroirs (19,20) renvoyant les faisceaux transmis (5a1,5a2) sur une deuxième lame semi-réfléchissante (21) qui les renvoie sur la plaque holographique (13),
l'orientation des miroirs (19,20) et des lames semi-réfléchissantes (18,21) étant telle qu'un au moins des faisceaux transmis par le déviateur (14) lorsque celui-ci est dans un état correspondant à l'enregistrement d'un hologramme frappe la plaque (13) au même endroit que le faisceau transmis par le déviateur (14) lorsque celui-ci est dans un état correspondant à l'enregistrement de l'hologramme immédiatement suivant ou immédiatement précédent.

7. Système selon l'une quelconque des revendications 1 à 6, caractérisé en ce que le dispositif de dédoublement du faisceau de référence est un réseau de diffraction à deux ordres.

8. Système selon l'une quelconque des revendications 1 à 7, caractérisé en ce qu'il comporte en outre:
- un diaphragme (9) interposé sur le trajet du faisceau de référence (5); et
- au moins une lentille ou analogue (10,11,11a) interposée sur le trajet du faisceau de référence (5) de manière à former l'image du diaphragme (9) sur la plaque (13).

## Patentansprüche

1. System zum Aufzeichnen einer Serie von Interferogrammen auf einer holographischen Platte (13), die erhalten werden, indem die Platte (13) bei zwei verschiedenen Zustände eines zu beobachtenden Gegenstandes (8) mit einem Referenzstrahl (5) und einem von dem Gegenstand (8) zurückgeworfenen Objektstrahl (8) beleuchtet wird, wobei diese zwei Strahlen aus einer gepulsten Laserquelle (1) hervorgegangen sind, mit einer Ablenkvorrichtung zum Ablenken des Referenzstrahls (5) und einer Teilervorrichtung (15) zum Teilen desselben, die auf dem Weg des Referenzstrahles (5) angeordnet und so eingerichtet sind, daß die Interferogramme voneinander auf der holographischen Platte getrennt sind, dadurch gekennzeichnet, daß es ferner eine Synchronisationsvorrichtung zum Synchronisieren der Ablenkvorrichtung (14) mit den Pulsen des Lasers (1) umfaßt und daß die Teilervorrichtung (15) zum Teilen des Referenzstrahles ein Interferometer umfaßt.

2. System nach Anspruch 1, dadurch gekennzeichnet, daß die Ablenkvorrichtung (14) eine akustooptische Ablenkvorrichtung umfaßt.

3. System nach Anspruch 2, dadurch gekennzeichnet, daß die akustooptische Ablenkvorrichtung zwei gekreuzte akustooptische Deflektoren (16, 17) umfaßt, die bei derselben Frequenz arbeiten.

4. System nach Anspruch 1, dadurch gekennzeichnet, daß die Ablenkvorrichtung einen rotierenden Spiegel umfaßt.

5. System nach einem der Ansprüche 2 und 3, dadurch gekennzeichnet, daß die Synchronisationsvorrichtung ein Verzögerungsgenerator ist, der die Frequenzänderungen der akustooptischen Ablenkvorrichtung (14) mit den Pulsen des Lasers (1) synchronisiert.

6. System nach einem der Ansprüche 1 bis 5, dadurch gekennzeichnet, daß das Interferometer (15) umfaßt:
- eine erste halbreflektierende Platte (18), die einen einfallenden Strahl (5a) in zwei transmittierte Strahlen (5a1 und 5a2) aufteilt; und
- zwei Spiegel (19, 20), die die transmittierten Strahlen (5a1, 5a2) auf eine zweite halbreflektierende Platte (21) lenken, die diese auf die holographische Platte (13) lenkt,
wobei die Orientierung der Spiegel (19, 20) und der halbreflektierenden Platten (18, 21) so ist, daß wenigstens einer der von der Ablenkvorrichtung (14) transmittierten Strahlen, wenn denn diese in einem der Aufzeichnung eines Hologrammes entsprechenden Zustand ist, die Platte (13) an derselben Stelle trifft wie der von der Ablenkvorrichtung (14) transmittierte Strahl, wenn diese in einem der Aufzeichnung des unmittelbar nachfolgenden oder unmittelbar vorhergehenden Hologrammes entsprechenden Zustand ist.

7. System nach einem der Ansprüche 1 bis 6, dadurch gekennzeichnet, daß die Teilervorrichtung zum Teilen des Referenzstrahles ein Beugungsgitter mit zwei Ordnungen ist.

8. System nach einem der Ansprüche 1 bis 7, ferner gekennzeichnet durch:
- eine Blende (9), die auf dem Weg des Referenzstrahles (9) liegt, und
- wenigstens eine Linse oder entsprechendes (10, 11, 11.A), die auf dem Weg des Referenzstrahles (5) angeordnet ist, um das Bild der Blende (9) auf der Platte (13) zu bilden.

## Claims

1. A system for recording, on a holographic plate (13), a series of interferograms obtained by illuminating the plate (13), for two different states of an article (8) to be observed, with a reference beam (5) and an object beam (6) reflected by the article (8), these two beams coming from a pulsed laser source (1) comprising, interposed on the path of the reference beam (5), a device (14) for deflecting this beam (5) and a device (15) for splitting the latter, arranged such that the interferograms are separated from one another on the holographic plate, characterised in that it further comprises a device for synchronising the deflection device (14) with the pulses of the laser (1) and in that the device (15) for splitting the reference beam comprises an interferometer.

2. A system according to Claim 1, characterised in that the deflection device (14) comprises an acousto-optical deflector.

3. A system according to Claim 2, characterised in that said deflector comprises two intersecting acousto-optical deflectors (16, 17) operating at the same frequency.

4. A system according to Claim 1, characterised in that the deflection device comprises a rotating mirror.

5. A system according to any one of Claims 2 and 3, characterised in that synchronisation device is a delay generator synchronising the frequency changes of the acousto-optical deflector (14) with the pulses of the laser (1).

6. A system according to any one of Claims 1 to 5, characterised in that the interferometer (15) comprises:
- a first semi-reflective plate (18) separating an incident beam (5a) into two transmitted beams (5a1 and 5a2); and
- two mirrors (19, 20) reflecting the transmitted beams (5a1,5a2) to a second semi-reflective plate (21) which reflects them to the holographic plate (13),
the orientation of the mirrors (19, 20) and the semi-reflective plates (18, 21) being such that at least one of the beams transmitted by the deflector (14) when the latter is in a state corresponding to the recording of a hologram strikes the plate (13) at the same place as the beam transmitted by the deflector (14) when the latter is in a state corresponding to the recording of the immediately subsequent or immediately preceding hologram.

7. A system according to any one of Claims 1 to 6, characterised in that the device for splitting the reference beam is a diffraction grating of two orders.

8. A system according to any one of Claims 1 to 7, characterised in that it further comprises:
- a diaphragm (9) interposed on the path of the reference beam (5); and
- at least one lens or similar (10, 11, lla) interposed on the path of the reference beam (5) so as to form the image from the diaphragm (9) on the plate (13).
